(19) Europäisches Patentamt
European Patent Office
Office européen des brevets

(11) **EP 4 586 035 A1**

(12) **EUROPEAN PATENT APPLICATION**
published in accordance with Art. 153(4) EPC

(43) Date of publication:
**16.07.2025 Bulletin 2025/29**

(21) Application number: 23862203.9

(22) Date of filing: **28.08.2023**

(51) International Patent Classification (IPC):
***G05D 1/00*** (2024.01)

(52) Cooperative Patent Classification (CPC):
**G05D 1/693; G05D 1/6987;** G01C 21/20;
G05D 2105/28; G05D 2107/70; G05D 2109/10;
Y02P 90/02

(86) International application number:
**PCT/CN2023/115133**

(87) International publication number:
**WO 2024/051507 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.09.2022 CN 202211091138**

(71) Applicant: **Beijing Geekplus Technology Co., Ltd.
Chaoyang District
Beijing 100102 (CN)**

(72) Inventors:
• **LI, Jing
Beijing 100102 (CN)**
• **TAN, Wenzhe
Beijing 100102 (CN)**
• **WEI, Xiguang
Beijing 100102 (CN)**
• **ZHAO, Chengye
Beijing 100102 (CN)**
• **LI, Hongbo
Beijing 100102 (CN)**
• **HAN, Hao
Beijing 100102 (CN)**

(74) Representative: **De Sandre, Emanuele et al
Società Italiana Brevetti S.p.A
Stradone San Fermo 21 sc B
37121 Verona (IT)**

(54) **MULTI-ROBOT PATH PLANNING METHOD AND APPARATUS, AND COMPUTING DEVICE**

(57) The present disclosure provides a multi-robot path planning method and apparatus, and a computing device. The multi-robot path planning method comprises: acquiring information about multiple robots waiting to travel; predicting conflict information of the robots according to the information about the multiple robots waiting to travel, wherein the conflict information comprises the type of conflict between a robot and other robots; according to the conflict information of the robots, collecting statistics about conflict information of a robot of which the conflict type is a first conflict type, and according to the statistical result, determining a robot meeting a re-planning condition corresponding to the first conflict type as a target robot, wherein the first conflict type is any one of a plurality of conflict types; and performing path re-planning on the target robot according to the first conflict type.

obtaining to-be-driving information of a plurality of robots — 202

predicting conflict information of the plurality of robots according to the to-be-driving information of the plurality of robots; wherein the conflict information comprises a conflict type of a conflict occurs between a robot and other robots — 204

counting conflict information of a robot whose conflict type is a first conflict type according to the conflict information of the plurality of robots, and determining a robot that meets a re-planning condition corresponding to the first conflict type as a target robot according to a counting result — 206

performing path re-planning on the target robot according to the first conflict type — 208

FIG. 2

**Description**

## CROSS-REFERENCE TO RELATED APPLICATIONS

This application claims priority of Chinese patent application No. 202211091138.8, filed on September 7, 2022, the entire content of which is incorporated herein by reference.

## TECHNICAL FIELD

The present disclosure relates to the field of warehousing technology, and in particular to a multi-robot path planning method, device and a computing device.

## BACKGROUND

With increasing intelligence and automation of logistics warehouses, automated guided vehicles (AGVs), also known as autonomous mobile robots, takes on an increasing number of handling and picking tasks in warehouses. To improve the efficiency of the autonomous mobile robots in handling and picking, reasonable planning of the path of the autonomous mobile robots has become a key research direction in the field of warehousing technology.

## SUMMARY

Embodiments of the present disclosure provide a multi-robot path planning method, a multi-robot path planning device, and a computer device.

According to a first aspect of an embodiment of the present disclosure, a multi-robot path planning method is provided. The method includes: obtaining to-be-driving information of a plurality of robots; predicting conflict information of the plurality of robots according to the to-be-driving information of the plurality of robots; in which the conflict information includes a conflict type of a conflict occurs between a robot and other robots; counting conflict information of a robot whose conflict type is a first conflict type according to the conflict information of the plurality of robots, and determining a robot that meets a re-planning condition corresponding to the first conflict type as a target robot according to a counting result, in which the first conflict type is any conflict type among a plurality of conflict types; and performing path re-planning on the target robot according to the first conflict type.

According to a second aspect of an embodiment of the present disclosure, a multi-robot path planning device is provided. The device includes: an obtaining module, configured to to-be-driving information of a plurality of robots; a predicting module, configured to predict conflict information of the plurality of robots according to the to-be-driving information of the plurality of robots; in which the conflict information includes a conflict type of a conflict occurs between a robot and other robots; a determining module, configured to count conflict information of a robot whose conflict type is a first conflict type according to the conflict information of the plurality of robots, and determine a robot that meets a re-planning condition corresponding to the first conflict type as a target robot according to a counting result, in which the first conflict type is any conflict type among a plurality of conflict types; and a re-planning module, configured to perform path re-planning on the target robot according to the first conflict type.

According to a third aspect of an embodiment of the present disclosure, a computing device is provided, including: a memory and a processor. The memory is configured to store computer-executable instructions, and when the processor executes the computer-executable instructions, the steps of the multi-robot path planning method in the first aspect are performed.

According to a fourth aspect of an embodiments of the present disclosure, a computer-readable storage medium is provided, which stores computer-executable instructions. When the computer-executable instructions are executed by a processor, the steps of the multi-robot path planning method in the first aspect are implemented.

## BRIEF DESCRIPTION OF THE DRAWINGS

FIG. 1 is a schematic diagram of a multi-robot path planning system provided by some embodiments of the present disclosure.
FIG. 2 is a flow chart of a multi-robot path planning method provided by some embodiments of the present disclosure.
FIG. 3A is a schematic diagram of an opposite conflict provided by some embodiments of the present disclosure;
FIG. 3B is a schematic diagram of a following conflict provided by some embodiments of the present disclosure;
FIG. 3C is a schematic diagram of a cross conflict provided by some embodiments of the present disclosure;

FIG. 3D is a schematic diagram of a stay conflict provided by some embodiments of the present disclosure;
FIG. 4 is a flow chart of a multi-robot path planning method for an opposite conflict provided by some embodiments of the present disclosure;
FIG. 5 is a flow chart of a multi-robot path planning method for a cross conflict and a following conflict provided by some embodiments of the present disclosure;
FIG. 6 is a flow chart of a multi-robot path planning method provided by some embodiments of the present disclosure.
FIG. 7A is a flow chart of a multi-robot path planning method provided by some embodiments of the present disclosure.
FIG. 7B is a schematic diagram of to-be-driving information of robots provided by some embodiments of the present disclosure.
FIG. 8 is a block diagram of a multi-robot path planning device provided by some embodiments of the present disclosure.
FIG. 9 is a schematic diagram of a computing device provided by some embodiments of the present disclosure.

## DETAILED DESCRIPTION

In the following description, numerous specific details are set forth to provide a thorough understanding of the present disclosure. However, the present disclosure can be implemented in many other ways different from those described here. Those skilled in the art can make similar generalizations without violating the connotation of the present disclosure. Therefore, the present disclosure is not limited by the specific implementation disclosed below.

The terms used in one or more embodiments of the present disclosure are merely for the purpose of describing a particular embodiment and are not intended to limit the one or more embodiments of the present disclosure. The terms "a", "the", and "said" in the singular form used in the one or more embodiments and appended claims of the disclosure are intended to include the plural forms as well, unless the context clearly indicates other meaning. It may be understood that the term "and/or" as used in one or more embodiments of the present disclosure refers to and includes any or all possible combinations of one or more associated listed items.

It may be understood that although the terms first, second, etc. may be used to describe various information in one or more embodiments of the present disclosure, such information should not be limited to these terms. These terms are used only to distinguish information in the same type from one another. For example, without departing from the scope of the one or more embodiments of the present disclosure, the first may also be referred to as the second, and likewise the second may be referred to as the first.

First, the terminology used in the following embodiments of the present disclosure will be explained.

Automated Guided Vehicle, (AGV): its distinctive feature is driverless driving. The AGV is equipped with an automatic guidance system, which ensures that the system can automatically drive along a predetermined path without manual piloting, to transport goods or materials automatically from a starting point to a destination.

Path re-planning: it consists of path planning and trajectory planning. The sequence points or curves connecting a starting position and an end position are called a path. A policy that constitutes the path is called path planning. Path re-planning usually refers to performing path re-planning when the existing paths cannot be traveled.

Robot conflict: refers to a situation where path edges or path points overlapping with other robots occurs when the robot is driving.

Opposite conflict: refers to two robots passing the same point or crossing the same edge in a 180-degree direction.

Cross conflict: refers to two robots passing through the same point in a 90-degree direction.

Stay conflict: means that a certain point on a path of a robot is an end point of other robots.

Following conflict: refers to two robots passing the same point or crossing the same edge in the same direction.

With increasing intelligence and automation of logistics warehouses, AGVs are increasingly taking on handling and picking tasks in the warehouses. In order to facilitate the scheduling and control of AGVs, a warehouse is generally divided into a grid map composes of path points and path edges. The path planning problem for multiple robots (such as AGVs) is an important factor affecting warehouse efficiency and is very challenging in both theoretical research fields and practical applications.

For example, a centralized method and a distributed method can be used to plan driving paths of the robots.

In some examples, the centralized method can search conflict-free paths for the multiple robots from the space-time dimension through a path planning algorithm. For example, the path points of each robot in the warehouse can be stored in a reservation table. A path point can be expressed as (x, y, t). The path point is used to indicate arrival at the coordinate position (x, y) at time point t. This path planning algorithm requires that two robots cannot occupy the same node or pass the same edge at the same time step, otherwise it will be regarded as a path conflict. However, the algorithm is highly complex and the search space grows exponentially with the number of robots. It is difficult to meet the huge computational overhead and real-time response requirements of path planning for hundreds or thousands of robots.

In some examples, the distributed method can plan paths for a single robot. In the path planning process, the distributed method is used to plan the path based on the principle of avoiding congestion and deadlock. For example, when searching for a path for a single robot, a reservation table or a full map may be used to analyze a congestion situation of a robot, and additional heuristic costs can be added to guide the search and avoid some potential conflicts. However, due to the frequent occurrence of dynamic events in the logistics and warehousing environment, such as parking to avoid when meeting vehicles, braking and deceleration, starting and accelerating, etc., many unpredictable path conflicts may occur during the driving of the robot, resulting in the robot being unable to drive and work normally.

To solve the above problems, the present disclosure provides a multi-robot path planning method. Before conflicts between the robots occur, the possible conflicts of each robot are predicted based on the to-be-driving information of each robot, and then the robots that may have conflicts are screened out. A robot that meets a re-planning condition corresponding to a first conflict type is selected as a target robot, and path re-planning is performed on the target robot according to the first conflict type. Therefore, the multi-robot path planning method provided by the embodiments of the present disclosure can reasonably avoid conflicts by re-planning the path of the target robot before a conflict occurs, and the target robot undergoing the path re-planning meets the re-planning condition, thus the re-planning efficiency is high.

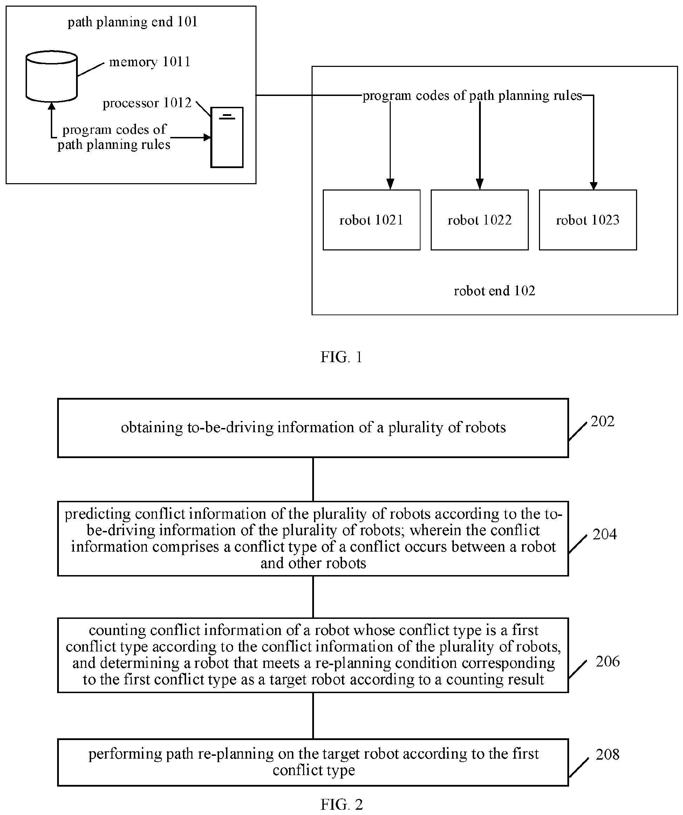

FIG. 1 is a schematic diagram of a multi-robot path planning system provided by some embodiments of the present disclosure. As shown in FIG. 1, the system includes a path planning end 101 and a robot end 102.

In some examples, the path planning end 101 may include: a memory 1011 and a processor 1012. The memory 1011 stores program codes of pre-written path planning rules, and the processor 1012 performs path planning on robots in the robot end 102 by executing the program codes of the path planning rules.

In some examples, the robot end 102 may include at least one robot(s), such as robot 1021, robot 1022, and robot 1023.

For example, the path planning end 101 can obtain to-be-driving information of multiple robots (such as the robot 1021, the robot 1022 and the robot 1023) from the robot end 102, and then predict conflict information of each robot based on the to-be-driving information of the multiple robots. Counting are made on the conflict information of the robots whose conflict type is a first conflict type according to the conflict information of the multiple robots. According to a counting result, a robot that meets a re-planning condition corresponding to the first conflict type is determined as a target robot. Finally, according to the first conflict type, path re-planning is performed on the target robot.

A multi-robot path planning method provided by embodiments of the present disclosure may be described in detail below with reference to the accompanying drawings.

FIG. 2 is a flow chart of a multi-robot path planning method provided by some embodiments of the present disclosure. In some examples, the multi-robot path planning method can be executed by the path planning end 101 in the above embodiments. As shown in FIG. 2, the method includes the following steps.

Step 202, to-be-driving information of a plurality of robots are obtained.

For example, each of the plurality of robots can be any robot in a warehousing scenario, such as a transport robot for transporting boxes or shelves.

In some examples, the to-be-driving information refers to pre-planned information related to driving. For example, the to-be-driving information may include at least one of a current position, an end position, a to-be-traveled path, and an end-point operation duration of a robot.

It should be noted that the to-be-driving information of the plurality of robots are obtained for subsequently analyzing and determining the to-be-driving information of the plurality of robots, so as to predict conflicts generated between any one of the robots and other robots.

In the embodiments of the present disclosure, by obtaining the to-be-driving information of the plurality of robots, analysis can be performed based on the to-be-driving information of the plurality of robots subsequently, to predict conflict information between each robot and other robots, thereby realizing the prediction of the conflict information of the plurality of robots.

In some embodiments, obtaining the to-be-driving information of the plurality of robots may include: obtaining the to-be-driving information of the plurality of robots at a current detection time point according to a preset detection cycle.

In some examples, the preset detection cycle refers to a preset time cycle for conflict detection. For example, the detection cycle may be set as a short time interval, such as 3 seconds. The current detection time point refers to obtaining the to-be-driving information of the robot starting from the current detection time point.

For example, if a total travel duration of a to-be-traveled path of robot A is 8 seconds, a total travel duration of a to-be-traveled path of robot B is 10 seconds, and the preset detection cycle is 3 seconds, the to-be-driving information of robot A and robot B at the third second, the sixth second, and the ninth second may be obtained respectively. The to-be-driving information of robot A at the sixth second at least includes the to-be-driving information of the robot A from the sixth second to the eighth second. The to-be-driving information of the robot B at the sixth second at least includes the to-be-driving information of the robot B from the sixth second to the tenth second.

It should be noted that the preset detection cycle interval is usually short, such as 3 seconds. The conflict detection is triggered every short fixed cycle to obtain the to-be-driving information of the plurality of robots at the current detection time point, thus the conflict detection can be performed for a plurality of times in a relatively short time, which further increases the frequency of analysis of the to-be-driving information of the plurality of robots, and improves the timeliness of subsequent conflict detection of the plurality of robots and determination of re-planned robots.

Embodiments of the present disclosure obtain the to-be-driving information of the plurality of robots at the current detection time point according to the preset detection cycle, so that the to-be-driving information of the plurality of robots at the current detection time point can be obtained according to the fixed detection cycle, thereby realizing conflict detection based on the time cycle, to improve the normalization of conflict detection.

Step 204, conflict information of the plurality of robots are predicted according to the to-be-driving information of the plurality of robots, the conflict information includes a conflict type of a conflict occurs between a robot and other robots.

For example, the conflict information may also include information such as a time point when the conflict occurs between the robot and other robots, a position where the conflict occurs, and identifiers of the robots having the conflict. The identifier of the robot may include a name of the robot.

In some embodiments, when predicting the conflict of each robot based on the information to be driven by each robot, the conflict prediction can be performed on all the to-be-traveled paths from the current position to the end position of each robot. In some examples, comparison may be performed on the to-be-driving information of the plurality of robots, conflict prediction can be performed from a starting path point to an ending path point of the plurality of robots, and the conflict information of a robot at each path point where there is a conflict can be recorded.

In some embodiments, predicting the conflict information of the plurality of robots according to the to-be-driving information of the plurality of robots includes: determining target driving data of each robot within a preset conflict detection range according to the to-be-driving information of the plurality of robots; in response to identifying that a first robot and a second robot pass through a same path point within a preset time period according to the target driving data of the first robot and the second robot, determining that there is a conflict between the first robot and the second robot; in response to identifying that the first robot and the second robot pass through a same path point within a preset time period according to the target driving data of the first robot and the second robot, determining that there is a conflict between a first robot and a second robot in which the first robot and the second robot are any two robots among the plurality of robots; identifying a conflict type of the conflict between the first robot and the second robot according to the target driving data of the first robot and the second robot; and generating conflict information of the first robot according to the conflict type.

For example, the first robot and the second robot may be any two different robots among the plurality of robots. The same path point passed by the first robot and the second robot within the preset time period can be any path point within the preset conflict detection range. For example, the same path point passed by the first robot and the second robot within the preset time period can be called a first path point. The first path point can be any path point of multiple path points within the preset conflict detection range. It should be noted that the following embodiments can be schematically explained by taking the same path point as the first path point as an example.

In some examples, the preset conflict detection range may be used to indicate a size of a conflict detection window. For example, the preset conflict detection range can be a range size with a fixed-length starting from the current position of the robot. For example, the preset conflict detection range can be measured in the number of cells and represented by a window size (such as WindowSize). For example, the window size of the preset conflict detection range can be 10 grids (10 cells).

In some examples, the target driving data is used to indicate driving data with to-be-driving information within the preset conflict detection range. For example, the target driving data may include to-be-traveled paths, path points, path edges and a time point of arriving at each path point of the robot within the preset conflict detection range.

In some examples, the preset time period refers to a preset time interval. For example, the preset time period can be 5 seconds, 10 seconds, etc.

In some examples, the conflict type is used to indicate a type of the conflict that occurs between the robots. For example, the conflict type may include an opposite conflict, a following conflict, a cross conflict, or a stay conflict, etc.

For example, the first robot and the second robot passing through the same path point, includes the following. The first robot and the second robot drive from the same direction and pass the same path point (such as the first path point); or, the first robot and the second robot travel towards each other and pass the same path point; or travel directions of the first robot and the second robot are at a 90 degree angle, and the first robot and the second robot pass the same path point.

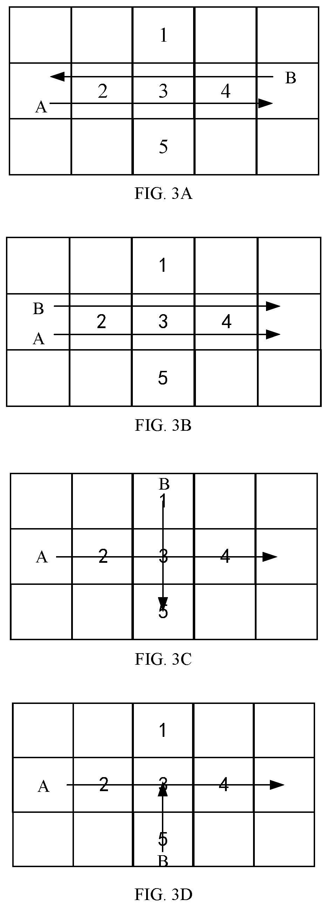

FIG. 3A is a schematic diagram of an opposite conflict provided by some embodiments of the present disclosure.

In some examples, the opposite conflict type means that travel directions of two robots are at a 180 degree angle, and the two robots pass through the same path point, or pass through a same path edge. As shown in FIG. 3A, a path to be traveled by robot A is 2→3→4, and a path to be traveled by robot B is 4→3→2. Robot A and robot B move towards each other, and both pass through path point 2, path point 3, and path point 4, then there is an opposite conflict between robot A and robot B.

FIG. 3B is a schematic diagram of a following conflict provided by some embodiments of the present disclosure.

In some examples, the following conflict type means that two robots travel in the same direction and pass through the same path point. As shown in FIG. 3B, a path to be traveled by robot A is 2→3→4, and a path to be traveled by robot B is 2→3→4. Robot A and robot B travel in the same direction, and both pass through path point 2, path point 3, and path point 4, then there is a following conflict between robot A and robot B.

FIG. 3C is a schematic diagram of a cross conflict provided by some embodiments of the present disclosure.

In some examples, the cross conflict type means that travel directions of two robots are at a 90 degree angle, and the two robots pass through the same path point. As shown in FIG. 3C, a path to be traveled by robot A is 2→3→4, and a path to be traveled by robot B is 1→3→5. Robot A and robot B travel to each other with directions at a 90 degrees angle, and both pass through path point 3, then there is a cross conflict between robot A and robot B at path point 3.

FIG. 3D is a schematic diagram of a stay conflict provided by some embodiments of the present disclosure.

In some examples, the stay conflict type means that a path point in a driving path of a robot is an end point of a driving path of another robot. As shown in FIG. 3B, a path to be traveled by robot A is 2→3→4, and a path to be traveled by robot B is 5→3. If path point 3 is the end point of robot B, and robot A passes through path point 3, then robot A and robot B have a stay conflict at path point 3.

It should be noted that predicting the conflicts between the plurality of robots may include predicting a conflict that may occur at any path point according to each path point, such as a conflict type, and then the conflict types that occur at each path point is counted, and the conflict types that occur between robots are counted.

The solution of the embodiments of the present disclosure can flexibly adjust the size of the detection window and the number of re-planed robots by presetting the conflict detection range, thereby improving the accuracy of robot conflict detection.

In some embodiments, before generating the conflict information of the first robot according to the conflict type, the method may further include: determining target position parameters of the first robot and the second robot according to the target driving data of the first robot and the second robot.

In some embodiments, generating the conflict information of the first robot according to the conflict type includes: generating the conflict information of the first robot according to the conflict type in a case that the target position parameters meet a preset position constraint condition.

In some examples, the target position parameter refer to a parameter of a position related to a preset position constraint condition. For example, the target position parameter may include a time point when the robot arrives at the first path point, and/or, the current position of the robot.

In some examples, the preset position constraint condition refers to a preset condition that constrain a certain position recognition conflict. For example, for a stay conflict, the preset position constraint condition may include whether a robot that arrives at the conflict path point (such as the first path point) takes the first path point as the end point. For an opposite conflict, the preset position constraint condition may include whether a distance between the first robot and the second robot is small enough, etc.

In some examples, different conflict types may correspond to different preset position constraint conditions. By setting the preset position constraint conditions, misprediction of conflict information of the robots can be reduced. For example, both robot A and robot B may pass through the same path point 5. If a current position of robot A is the path point 5 and it may move further, robot B may arrive at the path point 5 after passing two connected path edges. If a preset distance threshold is set to 1, the distance between robot A and robot B is greater than the preset distance threshold. Therefore, it can be determined that the distance between robot A and robot B does not meet the preset position constraint condition, thus there is no conflict between robot A and robot B at the path point 5.

In some embodiments, the target position parameter may include: a time point of arriving at the same path point (such as the first path point), and the preset position constraint condition includes: a time point of the first robot arriving at the path point being later than a time point of the second robot arriving at the path point, and/or a time difference between the time point of the first robot arriving at the path point and the time point of the second robot arriving at the path point being less than a preset time threshold

In some examples, that same path point is a path point where a conflict occurs. For example, if both robot A and robot B pass through the first path point, the first path point is the path point where a conflict occurs.

For example, the preset time threshold refers to a preset minimum time interval for ensuring that the two robots may not conflict at the first path point. That is to say, when the time difference between the time point of the first robot arriving at the path point and the time point of the second robot arriving at the path point is less than the preset time threshold, a conflict may occur between the first robot and the second robot.

For example, the preset time threshold can be set to 10 seconds. If the time points for robot A and robot B to arrive at the first path point is 20 seconds and 15 seconds respectively, the time difference between the time points of arriving at the first path point by robot A and robot B is 5 seconds. The time difference of 5 seconds is less than the preset time interval of 10 seconds, then a conflict may occur between the first robot and the second robot at the first path point.

For example, when it is determined that both robot A and robot B pass through the first path point, and the first path point is the end point of robot A, but not the end point of robot B, if robot A arrives later than robot B, it is determined there is no stay conflict between robot A and robot B. If robot A arrives earlier than robot B, it is determined that there is a stay conflict between robot A and robot B. That is, when the first robot arrives at the first path point later than the second robot, there may be a conflict between the first robot and the second robot.

In some examples, arriving at the path conflict point earlier or later may be used to determine at least one of a stay conflict, a cross conflict, an opposite conflict, or a following conflict. The difference between the time points of arriving at the path conflict point can also be used to determine at least one of a stay conflict, a cross conflict, an opposite conflict, or a following conflict. The embodiments of the present disclosure do not limit this.

The embodiment of the present disclosure considers arriving at the path point earlier or later and whether the difference is less than the preset time threshold as preset constraints, making the final determined conflict information more accurate.

In some embodiments, identifying the conflict type of the conflict between the first robot and the second robot according to the target driving data of the first robot and the second robot includes: in response to identifying that the first robot and the second robot pass through a same path edge according to the target driving data of the first robot and the second robot, identifying driving directions of the first robot and the second robot according to the target driving data of the first robot and the second robot; in response to the driving directions of the first robot and the second robot are the same, determining that the conflict type of the conflict between the first robot and the second robot is a following conflict; in response to the driving directions of the first robot and the second robot are different, determining that the conflict type of the conflict between the first robot and the second robot is an opposite conflict; and in response to identifying that the first robot and the second robot do not pass through the same path edge according to the target driving data of the first robot and the second robot, determining that the conflict type of the conflict between the first robot and the second robot is a cross conflict.

In some examples, after determining that a conflict exists between the first robot and the second robot, the conflict type of the conflict between the first robot and the second robot may be determined according to the target driving data. Firstly, it can be identified whether the first robot and the second robot pass through the same path edge. If the first robot and the second robot pass through the same path edge, it can be further determined whether the traveling directions of the first robot and the second robot are the same. If they are the same, it can be determined that there is a following conflict between the first robot and the second robot. If they are not the same, it can be determined that there is an opposite conflict between the first robot and the second robot. If the first robot and the second robot do not pass through the same path edge, it is determined that the first robot and the second robot are in a cross conflict.

In some examples, the same path edge refers to any path edge among multiple path edges in the to-be-traveled path. For example, the same path edge passed by the first robot and the second robot is a first path edge. The same path edge (such as the first path edge) may include the first path point. The driving direction is determined based on the to-be-traveled path in the target driving data.

For example, a robot that has a conflict can be stored in a conflict set (such as conflictSet). For example, robots with different conflict types can be stored in different conflict sets; or, robots with different conflict types can also be put into one conflict set.

In some examples, if a current path point of robot A is N1 and a previous path point is N, a path edge passed by robot A may be expressed as (N, N1). If a current path point of another robot B is N, and, it may also will pass through (N, N1), and a current position distance between robot A and robot B is 1 grid, which is less than the preset distance threshold of 2 grids, in this case, if robot B is behind robot A, there is a following conflict between robot A and robot B, and robot B can be stored in the conflict set.

In other examples, if the current path point of robot A is N and a next path point is N1, a to-be-traveled path edge of robot A is (N, N1). If the current path point of another robot B is N1, the to-be-traveled path edge is (N1, N), that is, robot A and robot B pass through the same path edge (N, N1) with directions in 180 degrees, there is an opposite conflict between robot A and robot B, and robot B can be stored in the conflict set.

In other examples, if the current path point of robot A is N1 and the next path point is N, and the current path point of robot B is M and the next path point is N, there is a cross conflict between robot A and robot B, and robot B can be stored in the conflict set.

The embodiment of the present disclosure determines the conflict type of the conflict between the first robot and the second robot by identifying the path points, path edges, and driving directions of the first robot and the second robot, thereby improving the accuracy of subsequent generation of conflict information for the first robot, and further improving the accuracy of determining the target robot.

In some embodiments, identifying the conflict type of the conflict between the first robot and the second robot according to the target driving data of the first robot and the second robot includes: in response to identifying that, according to the target driving data of the first robot and the second robot, the second robot takes the first path point as an end point and the first robot does not take the first path point as an end point, determining that the conflict type of the conflict between the first robot and the second robot is a stay conflict.

For example, the end point of the robot may refer to an end point of the to-be-traveled path of the robot.

In some examples, when the first robot and the second robot pass through the same path point (such as the first path point) and there is a path conflict, it is identified, according to the target driving data of the first robot and the second robot, whether the first robot and the second robot take the first path point as the end point. If the second robot takes the first path point as the end point, and the first robot does not take the first path point as the end point, it is determined that the first robot has a stay conflict and the second robot is a conflict robot of the first robot.

For example, when it is determined that the second robot takes the first path point as the end point and the first robot does not take the first path point as the end point, it can be further determined whether the first robot arrives at the first path point later than the second robot. If the first robot arrives at the first path point later than the second robot, it is determined that the first robot and the second robot have a stay conflict at the first path point.

In some examples, if both the first robot and the second robot take the first path point as the end point, it is determined that there is no stay conflict between the first robot and the second robot.

For example, if robot A and robot B pass through the same path point N, and robot A arrives at the point before robot B, and robot B takes the path point N as the end point of the path, then robot B has a stay conflict, and robot B can be stored in the conflict set..

Embodiments of the present disclosure identify the end points of the first robot and the second robot to determine whether there is a stay conflict between the first robot and the second robot, thereby improving the accuracy of subsequent generation of conflict information for the first robot, and further improving the accuracy of determining the target robot.

In some embodiments, after obtaining the to-be-driving data of the plurality of robots, the method further includes: recording the to-be-driving information of the plurality of robots in a preset information table.

In some embodiments, predicting the conflict information of the plurality of robots according to the to-be-driving information of the plurality of robots includes: predicting the conflict information of the plurality of robots according to the to-be-driving information of the plurality of robots in the preset information table by traversing the preset information table.

In some examples, the preset information table refers to a table preset for recording to-be-driving information of robots. For example, the obtained to-be-driving information of the plurality of robots can be recorded in the preset information table.

For example, after obtaining the to-be-driving information of the plurality of robots, it is recorded in the preset information table. When predicting the conflict information of each robot, the preset information table can be directly traversed, and the conflict information of each robot can be predicted according to the traversed to-be-driving information of each robot. Alternatively, after obtaining the to-be-driving information of the plurality of robots, the to-be-driving information of each robot can be directly read, and the conflict information of each robot can be predicted.

The embodiments of the present disclosure predict the conflict information of the robots based on the traversed to-be-driving information of each robot, and the obtained prediction result is more comprehensive and accurate, further ensuring the comprehensiveness of the to-be-driving information of each robot.

Step 206, conflict information of a robot whose conflict type is a first conflict type is counted according to the conflict information of the plurality of robots, and a robot that meets a re-planning condition corresponding to the first conflict type is determined as a target robot according to a counting result.

For example, the first conflict type is any conflict type among a plurality of conflict types. For example, the first conflict type may be any one of an opposite conflict, a following conflict, a cross conflict, or a stay conflict.

In some examples, the counting result refers to a statistical result of the conflict information of the robots have a conflict. For example, the statistical information may include the number of conflicts of each robot. For example, the statistical information of robot A may include: robot A has 3 opposite conflicts, 6 cross conflicts, etc. The statistical information of robot B can include: robot B has 4 cross conflicts, 2 stay conflicts, etc.

In some examples, the re-planning condition refers to a condition for determining that a robot needs path re-planning. Different conflict types may correspond to different re-planning conditions.

For example, robots that meet the re-planning condition (i.e., target robots) can be stored in a re-planning set (such as rePlanSet).

In some embodiments, when the first conflict type is an opposite conflict, counting conflict information of the robot whose conflict type is the first conflict type according to the conflict information of the plurality of robots, and determining a robot that meets a re-planning condition corresponding to the first conflict type as a target robot according to a counting result includes: for at least one third robot that has an opposite conflict, obtaining a number of opposite conflicts of each third robot by counting a number of robots that have an opposite conflict with each third robot based on the conflict information of the at least one third robot; and determining a third robot with a maximum number of opposite conflicts among the at least one third robot as the target robot.

In some examples, the number of opposite conflicts refers to the number of opposite conflicts that occur to any robot (such as the third robot). For example, the number of opposite conflicts for robot A is 3, and the number of opposite conflicts for robot B is 5.

In some examples, the number of conflicts corresponding to the same conflict type between any two robots can be one or multiple. For example, if the number of robots that have an opposite conflict with robot A includes 1 for robot B, 2 for robot C, and 1 for robot D, the number of opposite conflicts for robot A is 4.

For example, a robot that encounters an opposite conflict may be called a third robot. The number of the third robots may be multiple. Among the plurality of third robots, the number of opposite conflicts that may occur for each third robot may be different. Among the plurality of third robots, the third robot with the maximum number of opposite conflicts can be determined as the target robot.

In some embodiments, for at least one third robot that has an opposite conflict, obtaining a number of opposite conflicts of each third robot by counting a number of robots that have an opposite conflict with each third robot based on the conflict information of the at least one third robot includes: for at least one third robot in a conflict set, obtaining the number of opposite conflicts of each third robot by counting the number of robots that have an opposite conflict with each third robot according to the conflict information of each third robot. After determining the third robot with the maximum number of opposite conflicts among the at least one third robot as the target robot, the method further includes: deleting the target robot from the conflict set, and storing the target robot into a re-planning set, until there is no third robot that has the opposite conflict in the conflict set.

In some embodiments, performing path re-planning on the target robot according to the first conflict type includes: performing the path re-planning on each target robot in the re-planning set according to the opposite conflict.

For example, the conflict set refers to a set used to record robots with various conflicts. For example, a conflict set can store robots with opposite conflicts or robots with cross conflicts.

In some examples, for any robot in the conflict set, the number of robots that have an opposite conflict with the robot is counted according to the conflict information of the robot. When counting the number of robots, it may be that the robot has one or more than one conflict with a certain robot.

For example, the target robot can be stored in a preset re-planning set (rePlanSet). For example, an initial value of the re-planning set may be empty.

For example, in the conflict set (conflictSet), after the third robot with the maximum number of opposite conflicts is determined as the target robot, the target robot can be moved from the conflict set (conflictSet) to the re-planning set (rePlanSet). That is, the target robot is deleted from the conflict set (conflictSet), and added to the re-planning set (rePlanSet).

In some examples, after completing the movement of the first target robot, it may further determined whether there are still third robots that have the opposite conflict among the remaining third robots in the updated conflict set (the target robot has been deleted). If it exists, a third robot with the maximum number of opposite conflicts is determined as a second target robot, and the second target robot is deleted from the conflict set (conflictSet) and moved to the re-planning set (rePlanSet). This process is repeated until there is no third robot that have the opposite conflict in the conflict set (conflictSet).

For example, after moving the third robot with the maximum number of opposite conflicts in the conflict set to the re-planning set (rePlanSet), the number of opposite conflicts of each third robot in the conflict set is re-calculated, and a third robot with the maximum number of opposite conflicts is moved to the re-planning set (rePlanSet), and this process is repeated until there is no third robot that have the opposite conflict in the conflict set (conflictSet) or the conflict set (conflictSet) is empty.

For example, the number of opposite conflicts for each robot can be calculated by the following equation (1):

$$Qty_i^c = \sum_{j=1}^{windowSize} Qty_{i,j}^c \quad c = opposite, \ i = 1,2,\dots,n \qquad (1);$$

where, $c$ represents the conflict type, *opposite* represents the opposite conflict, $i$ represents the i<sup>th</sup> robot, $n$ represents the size of the conflict set (conflictSet), and $j$ represents the j<sup>th</sup> path point of an unfinished path. $Qty_i^c$ represents the number of conflicts of type c of the i<sup>th</sup> robot, and $Qty_{i,j}^c$ represents the number of conflicts of type c of the i<sup>th</sup> robot at the j<sup>th</sup> path point.

For example, robots in opposite conflict with robot A include robot B and robot C, the robot in opposite conflict with robot B includes robot A, and the robots in opposite conflict with robot C include robot A and robot D. In the first round of screening, the conflictSet = {A, B, C}, and the rePlanSet = {empty}. If the numbers of conflicts for robot A, robot B, and robot C are 2, 1, and 2 respectively, robot A can be determined as the target robot, then robot A is deleted from the conflictSet, and robot A is put into the rePlanSet. In the second round of screening, conflictSet={B,C}, rePlanSet={A}. Since A is determined as the target robot , thus it no longer contribute to conflict, so the numbers of conflicts for robot B and robot C are updated to 0 and 1 respectively. In this case, robot C can be determined as the target robot.

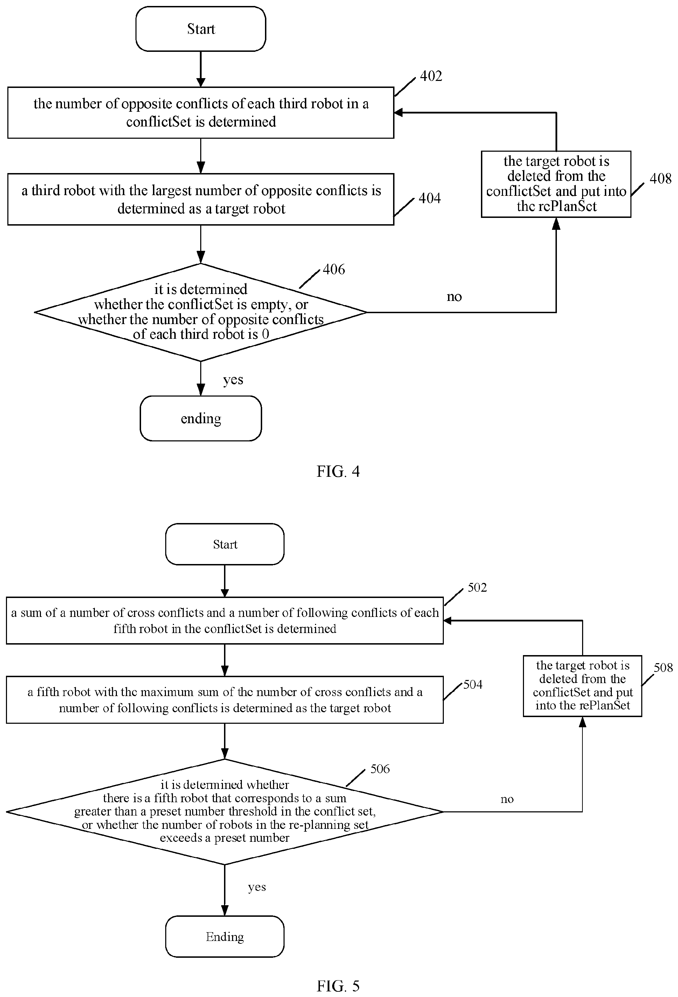

FIG. 4 is a flow chart a multi-robot path planning method for an opposite conflict provided by some embodiments of the present disclosure. As shown in FIG. 4, the method includes the following steps.

Step 402, the number of opposite conflicts of each third robot in a conflictSet is determined.

Step 404, a third robot with the largest number of opposite conflicts is determined as a target robot.

Step 406, it is determined whether the conflictSet is empty, or whether the number of opposite conflicts of each third robot is 0.

If the conflictSet is empty or the number of opposite conflicts of each third robot is 0, the process ends; if the conflictSet is not empty, or the number of opposite conflicts of a third robot is not 0, step 408 is perforemd.

Step 408, the target robot is deleted from the conflictSet and put into the rePlanSet.

It is returned to step 402.

The embodiment of the present disclosure reduces the number of robots in the conflict set by deleting the target robot from the conflict set and storing it in the re-planning set, so as to facilitate subsequently counting the number of opposite conflicts of the remaining robots in the conflict set, and to facilitate directly selecting robots from the planning set for re-planning, to speed up the re-planning of robots that have conflicts.

In some embodiments, when the first conflict type is a stay conflict, counting conflict information of the robot whose conflict type is the first conflict type according to the conflict information of the plurality of robots, and determining a robot that meets a re-planning condition corresponding to the first conflict type as a target robot according to a counting result, includes: for a fourth robot that has a stay conflict, counting an end-point operation duration of a robot that has the stay conflict with the fourth robot based on conflict information of the fourth robot; and determining the fourth robot as the target robot in response to the end-point operation duration exceeds a preset duration threshold.

For example, the fourth robot may be any robot among multiple robots that has a stay conflict.

In some examples, the end-point operation duration refers to a duration for operation after the robot that has a stay conflict with the fourth robot arrives at an end point of the to-be-traveled path. For example, when the robot that has the stay conflict with the fourth robot is a container robot, the container robot may perform operations of picking up and placing a container after arriving at the end point, including lifting and lowering the fork, and picking up/putting back the container, then a duration used for lifting and lowering the fork and picking up/putting back the container is the end-point operation duration of the bin robot.

In some examples, the preset duration threshold refers to a preset threshold for the duration of the end-point operation. For example, the preset duration threshold can be 1 minute. When the operation duration of the conflict robot B of robot A at the end point is 2 minutes and exceeds the preset duration threshold (1 minute), robot A can be determined as the target robot.

In some examples, when there are multiple robots that have the stay conflict with robot A at a certain path point, a robot with the longest end-point operation duration among the multiple robots may be determined, and it is determined whether the end-point operation duration corresponding to this robot exceeds the preset duration threshold. If it exceeds, robot A is determined to be the target robot.

For example, if there is a stay conflict on the path in front of the fourth robot, and the operation duration of the corresponding conflict robot operation at the end point exceeds the preset duration threshold, the fourth robot may be determined as the target robot. That is, the fourth robot may be deleted from the conflictSet and put into the rePlanSet.

In some embodiments, when the first conflict type includes a cross conflict and a following conflict, counting conflict information of the robot whose conflict type is the first conflict type according to the conflict information of the plurality of robots, and determining a robot that meets a re-planning condition corresponding to the first conflict type as a target robot according to a counting result, includes: for at least one fifth robot that has a cross conflict and/or a following conflict, obtaining a sum of a number of cross conflicts and a number of following conflicts of each of the at least one fifth robot by counting a number of robots that have a cross conflict or a following conflict with each of the at least one fifth robot according to the conflict information of the at least one fifth robot; and determining a fifth robot with a maximum sum of the number of cross conflicts and the number of following conflicts in the at least one fifth robot as the target robot.

In some examples, the sum of the number of cross conflicts and the number of following conflicts refers to a sum of a number of conflicts for occurring cross conflicts and the number of conflicts for occurring following conflicts occurring for any robot (such as the fifth robot). For example, if the number of cross conflicts occurring for robot A is 3 and the number of following conflicts is 2, the sum of the number of cross conflicts occurring for robot A and the number of following conflicts occurring for robot A is 5; if the number of cross conflicts occurring for robot B has is 1 and the number of following conflicts is 2, the sum of the number of cross conflicts and the number of following conflicts occurring for robot B is 3.

In some examples, the number of conflicts corresponding to any two robots having cross conflicts and/or following conflicts may be one or multiple. For example, the number of robots that have cross conflicts and/or following conflicts with robot A can be 1 for robot B, 2 for robot C, and 1 for robot D. That is, the sum of the number of cross conflicts and the number of following conflicts for robot A is 4.

For example, a robot that has cross conflicts and following conflicts can be called a fifth robot, and the number of fifth robots can be multiple. In the fifth robots, the sum of the number of cross conflicts and the number of following conflicts that occur for different fifth robots may be different. Among the multiple fifth robots, a fifth robot with the maximum sum of the number of cross conflicts and the number of following conflicts may be determined as the target robot.

In some embodiments, for at least one fifth robot that has a cross conflict and/or a following conflict, obtaining the sum of the number of cross conflicts and the number of following conflicts of each of the at least one fifth robot by counting the number of robots that have a cross conflict or a following conflict with each of the at least one fifth robot according to the conflict information of the at least one fifth robot, includes: for at least one fifth robot in a conflict set, obtaining the sum of the number of cross conflicts and the number of following conflicts of each of the at least one fifth robot by counting the number of robots that have a cross conflict or a following conflict with each of the at least one fifth robot according to the conflict information of the at least one fifth robot; in which, the conflict set is configured to record robots having conflicts.

In some embodiments, determining the fifth robot with the maximum sum of the number of cross conflicts and the number of following conflicts among the at least one fifth robot as the target robot, the method further includes: deleting the target robot from the conflict set, and storing the target robot into a re-planning set, until there is no fifth robot whose corresponding sum of the number of cross conflicts and the number of following conflicts is greater than a preset number threshold in the conflict set, or a number of robots in the re-planning set exceeds a preset number.

For example, in the conflict set (conflictSet), the fifth robot with the maximum sum of the number of cross conflicts and the number of following conflicts is determined as the target robot, and then the target robot is moved from the conflictSet to the rePlanSet. That is, the target robot is deleted from the conflictSet and added to the rePlanSet.

In some examples, after completing the movement of the first target robot, it is further determined whether there is a robot with a sum of the number of cross conflicts and the number of following conflicts being greater than the preset number threshold among the remaining fifth robots in the updated conflictSet (the target robot has been deleted). If the robot exists, the robot is moved from the conflict set to the rePlanSet. This process is repeated until the sum of the numbers of cross conflicts and the following conflicts in the conflictSet is less than the preset number threshold, or the number of robots in the rePlanSet exceeds the preset number.

In some examples, the preset number threshold refers to a preset threshold value for the sum of the number of cross conflicts and the number of following conflicts. For example, if the preset number threshold is 4, when the sum of the number of cross conflicts and the number of following conflicts of robot A is 5, since the sum is greater than the preset conflict number threshold of 4, there is no need to determine the target robot from the conflictSet.

For example, the sum of the number of cross conflicts and the number of following conflicts for each robot can be calculated by the following equation (2):

$$Qty_i^c = \sum_{j=1}^{windowSize} Qty_{i,j}^c \quad c = \{follow, cross\}, \ i = 1,2,\dots,n \qquad (2);$$

where, *c* represents the conflict type, *follow* represents the following conflict, *cross* represents the cross conflict, *i* represents the i$^{th}$ robot, *n* represents the size of the conflictSet, and *j* represents the j$^{th}$ path point of an unfinished path.

$Qty_i^c$ represents the number of conflicts of type *c* of the i$^{th}$ robot, and $Qty_{i,j}^c$ represents the number of conflicts of class c of the i$^{th}$ robot at the j$^{th}$ path point.

In some examples, the number of robots in the rePlanSet exceeding the preset number may include: a number of target robots in the rePlanSet exceeding the preset number, or a number of target robots in the rePlanSet exceeds a percentage upper limit.

For example, a target robot threshold can be preset for the rePlanSet. For example, if the target robot threshold is 10, when the number of target robots in the rePlanSet reaches 10, there is no need to store the target robot into the rePlanSet. Alternatively, a percentage threshold may be preset for the re-planning set. For example, the percentage threshold is 10%. If the number of robots in the conflictSet is 80, when the number of robots in the rePlanSet reaches 8, there is no need to move the target robot determined in the conflict set to the rePlanSet.

In some embodiments, performing path re-planning on the target robot according to the first conflict type includes: performing the path re-planning on each target robot in the re-planning set according to the cross conflict and the following conflict.

In some examples, the cross conflict and the following conflict can be resolved by a robot arriving later by slowing down or stopping to avoid. Thus, when the sum of the numbers of cross conflicts and following conflicts is greater than the preset number threshold, it may cause congestion. In this case, the robot that arrives later may be determined as the target robot for path re-planning. When the sum of the numbers of cross conflicts and following conflicts is not greater than the preset number threshold, the impact can be resolved by slowing down or stopping to avoid the conflict. For example, the cross conflicts and follow conflicts occur more frequently than the stay conflict and opposite conflict. If the re-planning is performed for all the robots that have the cross conflict and follow conflict, the calculation amount for re-planning may be large and the effect may be poor. Therefore, robots (i.e., parts of robots) with the sum of numbers of cross conflicts and follow conflicts that is greater than the preset number threshold are selected for re-planning. Alternatively, the re-planning is performed for all the robots that have cross conflicts and/or following conflicts. Alternatively, selection may be made according to the actual situation.

It should be noted that, when deleting the target robot from the conflict set and storing the target robot in the re-planning set, the target robot can be deleted from the conflict set and the identifier or name and the corresponding to-be-driving information of the target robot may be stored in the re-planning set. The re-planning is performed for the target robots in the re-planning set based on the cross conflicts and following conflicts subsequently.

FIG. 5 is a flow chart of a multi-robot path planning method for a cross conflict and a following conflict provided by some embodiments of the present disclosure. As shown in FIG. 5, the method includes the following steps.

Step 502, a sum of a number of cross conflicts and a number of following conflicts of each fifth robot in the conflictSet is determined.

Step 504, a fifth robot with the maximum sum of the number of cross conflicts and a number of following conflicts is determined as the target robot.

Step 506, it is determined whether there is a fifth robot that corresponds to a sum greater than a preset number threshold in the conflict set, or whether the number of robots in the re-planning set exceeds a preset number.

If there is no fifth robot in the conflict set whose corresponds to a sum greater than a preset number threshold, or the number of robots in the re-planning set exceeds the preset number, the process ends; if there is still a fifth robot in the conflict set whose corresponds to a sum greater than the preset number threshold or the number of robots in the re-planning set does not exceed the preset number, then step 508 is further performed.

Step 508, the target robot is deleted from the conflictSet and put into the rePlanSet.

It returns to step 502.

Step 208, path re-planning is performed on the target robot according to the first conflict type.

In some examples, different conflict types may correspond to different path re-planning methods.

In some embodiments, performing path re-planning on the target robot according to the first conflict type includes: determining the basic traffic cost corresponding to the first conflict type; predicting a probability of conflict occurrence between each of at least one conflict robot and the target robot at a target path point, in which the target path point is a path point within a preset range of a current position of the target robot; determining at least one traffic cost incurred by the at least one conflict robot, respectively, on the target robot at the target path point according to the basic traffic cost and the probability of conflict occurrence; and performing path re-planning on the target robot based on the at least one traffic cost.

In some examples, determining the different basic traffic costs corresponding to the conflict types may include: determining multiple paths with a total penalty value by using a current position of the target robot as a basis, determining a path with a total penalty value less than a preset basic traffic cost threshold from the multiple paths as a re-planned path. Or, it may include: exploring surrounding nodes based on a path point corresponding to the current position of the robot, obtaining path information of other robots in the surrounding nodes, and then determining a conflict type, selecting a path point meets the preset basic traffic cost threshold from the current path point to the next path point as a next path point; and moving by taking the next path point as the basis until arriving an end point.

In some examples, the base traffic cost is used to indicate a base traffic cost corresponding to a conflict that corresponds to the conflict type. For example, different base traffic costs can be configured for the opposite conflict, cross conflict, following conflict, and stay conflict.

For example, the following conflict may slow down the moving speed of a robot behind, but usually do not cause deadlocks, etc. Therefore, the basic traffic cost corresponding to following conflict can be set lower. For another example, the cross conflict generally occur at intersections, where the robot needs to slow down, stop to avoid, accelerate, etc., which may affect the moving speed. Therefore, the basic traffic cost corresponding to the cross conflict may be higher than that of the following conflict. As another example, the opposite conflict may cause deadlocks. For example, in some relatively narrow lane areas, if an opposite conflict occurs, one party may need to turn around and re-plan the path. Therefore, the cost caused by the opposite conflict may be relatively large, that is, the basic traffic cost corresponding to the opposite conflict can be higher than that of the cross conflict. For another example, for the stay conflict, when other robots reach the end point, they generally may continue working at the end point, such as lifting or lowering shelves, forking boxes, pallets, etc. , which may cause a blocked robot to wait for a long time. Therefore, the basic traffic cost corresponding to the stay conflict can be set higher. Therefore, the basic traffic cost of the conflict types from light to heavy can be: the following conflict, the cross conflict, the opposite conflict and the stay conflict.

In some examples, the target path point refers to a path point within a preset range of the current position of the target robot, and may be a surrounding path point corresponding to the current position of the target robot.

In some examples, the traffic cost incurred by each robot for the target robot at the target path point is determined based on the basic traffic cost and the probability of conflict occurrence. For example, when the current robot is currently at a current path point L, there are surrounding path points M and N, when exploring by taking the surrounding path point M as the target path point, a conflict type corresponding to a conflict robot A is opposite conflict, and a corresponding conflict probability is P1 , the basic traffic cost is t1; a conflict type corresponding to a conflict robot B is cross conflict, a corresponding conflict probability is P2, and the basic traffic cost is t2; a conflict type corresponding to a conflict robot C is following conflict, a corresponding conflict probability is P3, and the basic traffic cost is t3. Then the traffic cost generated by conflict robot A is t1*P1, the traffic cost generated by conflict robot B is t2*P2, and the traffic cost generated by conflict robot C is t3*P3, so the total traffic cost of the target path point (the path point M) is t1*P1+t2*P2+t3*P3. Or, when exploring by taking the surrounding path point N as the target path point, the total traffic cost of the target path point N is calculated, the target path point whose total traffic cost meets the preset traffic cost threshold is selected form the surrounding path points that as the next path point based on the total traffic costs corresponding to the surrounding path points.

For example, after determining the traffic costs of path point M and path point N, the path point M and path point N may further be taken as the current path points to continue exploring the surrounding path points until reaching an end point of a path to be traveled by the target robot that needs re-planning.

In some examples, on the basis of re-planning the path based on the traffic cost, selection can be made based on the length of the determined path, so that the re-planned path meets the preset path length threshold. With a shorter path length, it can quickly complete mobile handling tasks, saving robot movement resources and occupied path resources.

The embodiment of the present disclosure explores the total traffic cost of the target path point, selects the target path point that meets the preset traffic cost threshold from multiple target path points, and repeats the process, so that all the path points in the re-planned path meet the preset traffic cost threshold, the path of the target robot is re-planned, and the re-planned path also fully ensures the safety of the movement of the target robot.

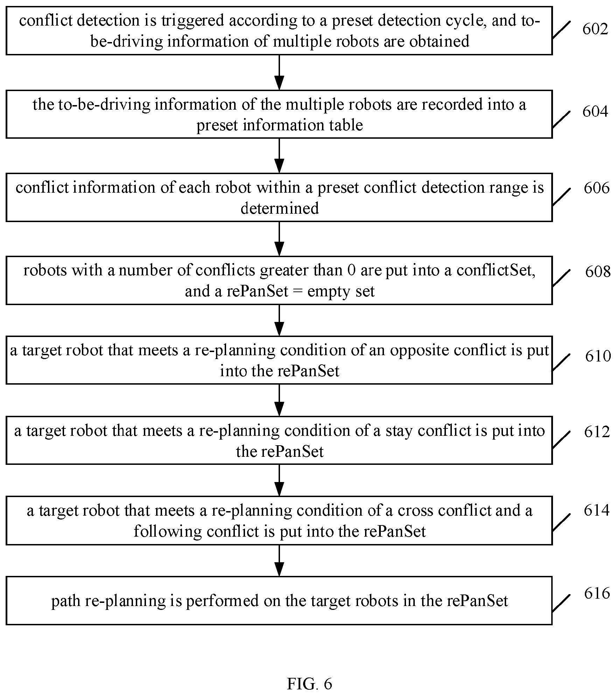

FIG. 6 is a flowchart of a multi-robot path planning method provided by some embodiments of the present disclosure. As shown in FIG. 6, the method includes the following steps.

Step 602, conflict detection is triggered according to a preset detection cycle, and to-be-driving information of multiple robots are obtained.

Step 604, the to-be-driving information of the multiple robots are recorded into a preset information table.

Step 606, conflict information of each robot within a preset conflict detection range is determined.

Step 608, robots with a number of conflicts greater than 0 are put into a conflictSet, and a rePanSet = empty set.

Step 610, a target robot that meets a re-planning condition of an opposite conflict is put into the rePanSet.

Step 612, a target robot that meets a re-planning condition of a stay conflict is put into the rePanSet.

Step 614, a target robot that meets a re-planning condition of a cross conflict and a following conflict is put into the rePanSet.

Step 616, path re-planning is performed on the target robots in the rePanSet.

It should be noted that the embodiment of the present disclosure does not limit the execution order of step 610, step 612 and step 614.

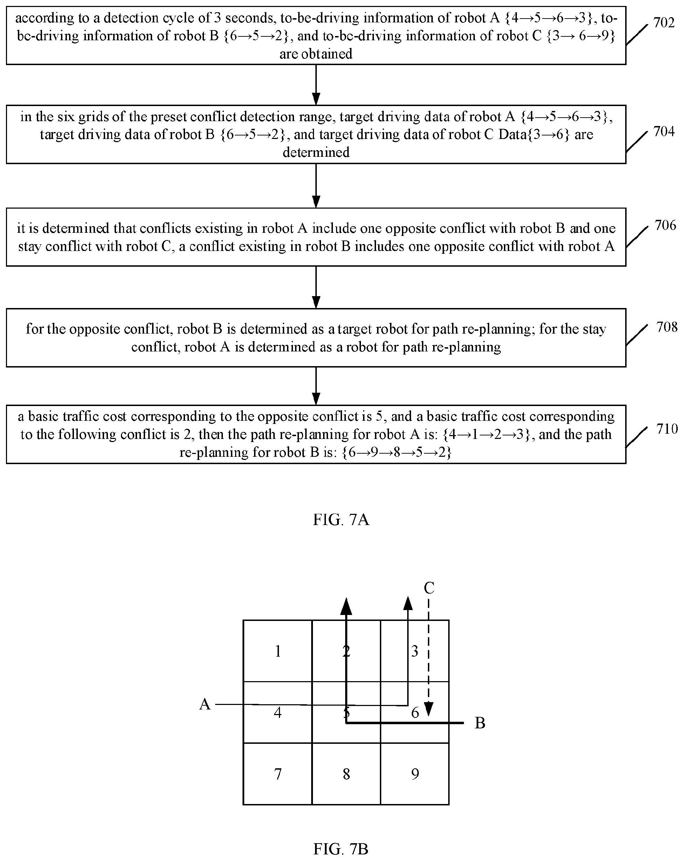

FIG. 7A is a flowchart of a multi-robot path planning method provided by some embodiments of the present disclosure. FIG. 7B is a schematic diagram of to-be-driving information of robots provided by some embodiments of the present disclosure. Examples are given to the multi-robot path planning method below with reference to FIG. 7A and FIG. 7B. As shown in FIG. 7A, the method includes the following steps.

Step 702, according to a detection cycle of 3 seconds, to-be-driving information of robot A {4→5→6→3}, to-be-driving information of robot B {6→5→2}, and to-be-driving information of robot C {3→ 6→9} are obtained.

For example, the to-be-driving information of robots A, B, and C are shown in FIG. 7B.

Step 704, in the six grids of the preset conflict detection range, target driving data of robot A {4→5→6→3}, target driving data of robot B {6→5→2}, and target driving data of robot C Data{3→6} are determined.

Step 706, it is determined that conflicts existing in robot A include one opposite conflict with robot B and one stay conflict with robot C, a conflict existing in robot B includes one opposite conflict with robot A.

Step 708, for the opposite conflict, robot B is determined as a target robot for path re-planning; for the stay conflict, robot A is determined as a robot for path re-planning.

Step 710, a basic traffic cost corresponding to the opposite conflict is 5, and a basic traffic cost corresponding to the following conflict is 2, then the path re-planning for robot A is: {4→1→2→3}, and the path re-planning for robot B is: {6→ 9→8→5→2}.

The embodiments of the disclosure, possible conflicts are predicted before a conflict occurs at a robot, and the robots that may have conflicts are screened to select the target robot whose counting result of conflict information meet the re-planning condition corresponding to the first conflict. Path re-planning is performed on the target robot before a conflict may occur. By performing the path re-planning on the target robot, it can reasonably avoid conflicts, and the target robot undergoing the path re-planning meets the re-planning condition, and the re-planning efficiency is higher.

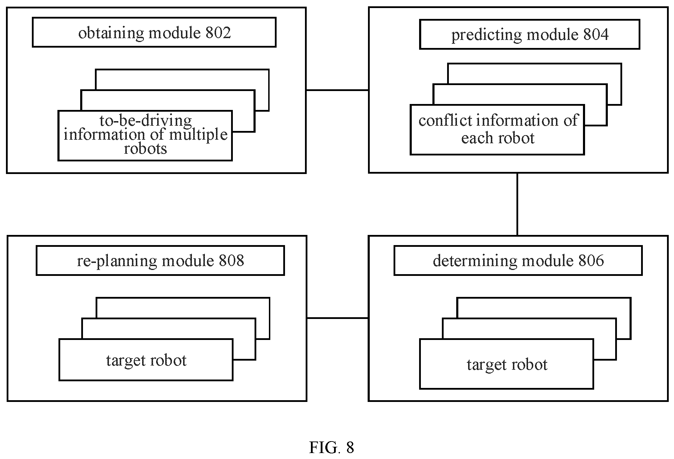

FIG. 8 is a block diagram of a multi-robot path planning device provided by some embodiments of the present disclosure. As shown in FIG. 8, the multi-robot path planning device 800 includes: an obtaining module 802, a predicting module 804, a determining module 806 and a re-planning module 808.

The obtaining module 802 is configured to obtain to-be-driving information of a plurality of robots.

The predicting module 804 is configured to predict conflict information of the plurality of robots according to the to-be-driving information of the plurality of robots; in which the conflict information includes a conflict type of a conflict occurs between a robot and other robots.

The determining module 806 is configured to count conflict information of a robot whose conflict type is a first conflict type according to the conflict information of the plurality of robots, and determine a robot that meets a re-planning condition corresponding to the first conflict type as a target robot according to a counting result, in which the first conflict type is any conflict type among a plurality of conflict types.

The re-planning module 808 is configured to perform path re-planning on the target robot according to the first conflict type.

In some embodiments, the prediction module 804 is configured to: determine target driving data of each robot within a preset conflict detection range according to the to-be-driving information of the plurality of robots; in response to identifying that a first robot and a second robot pass through a same path point within a preset time period according to the target driving data of the first robot and the second robot, determine that there is a conflict between the first robot and the second robot, in which the first robot and the second robot are any two robots among the plurality of robots; identify a conflict type of the conflict between the first robot and the second robot according to the target driving data of the first robot and the second robot; and generate conflict information of the first robot according to the conflict type.

In some embodiments, the multi-robot path planning device 800 further includes a target position parameter determination module. The target position parameter determination module is configured to determine target position parameters of the first robot and the second robot according to the target driving data of the first robot and the second robot. The prediction module 804 is configured to generate the conflict information of the first robot according to the conflict type in a case that the target position parameters meet a preset position constraint condition.

In some embodiments, the target position parameter includes: a time point of arriving at the path point. The preset position constraint condition includes: a time point of the first robot arriving at the path point being later than a time point of the second robot arriving at the path point, and/or a time difference between the time point of the first robot arriving at the path point and the time point of the second robot arriving at the path point being less than a preset time threshold.

In some embodiments, the prediction module 804 is configured to: in response to identifying that the first robot and the second robot pass through a same path edge according to the target driving data of the first robot and the second robot, identify driving directions of the first robot and the second robot according to the target driving data of the first robot and the second robot; in which the path edge includes the path point; in response to the driving directions of the first robot and the second robot are the same, determine that the conflict type of the conflict between the first robot and the second robot is a following conflict; in response to the driving directions of the first robot and the second robot are different, determine that the conflict type of the conflict between the first robot and the second robot is an opposite conflict; and in response to identifying that the first robot and the second robot do not pass through the same path edge according to the target driving data of the first robot and the second robot, determine that the conflict type of the conflict between the first robot and the second robot is a cross conflict.

In some embodiments, the prediction module 804 is configured to: in response to identifying that, according to the target driving data of the first robot and the second robot, the second robot takes the path point as an end point and the first robot does not take the path point as an end point, determine that the conflict type of the conflict between the first robot and the second robot is a stay conflict.

In some embodiments, the first conflict type includes an opposite conflict. The determining module 806 is configured to: for at least one third robot that has an opposite conflict, obtain a number of opposite conflicts of each third robot by counting a number of robots that have an opposite conflict with each third robot based on the conflict information of the at least one third robot; and determine a third robot with a maximum number of opposite conflicts among the at least one third robot as the target robot.

In some embodiments, the determining module 806 is configured to: for at least one third robot in a conflict set, obtain the number of opposite conflicts of each third robot by counting the number of robots that have an opposite conflict with each third robot according to the conflict information of each third robot; in which, the conflict set is configured to record robots having conflicts. The multi-robot path planning device 800 further includes a first execution module, configured to: delete the target robot from the conflict set, and store the target robot into a re-planning set, until there is no third robot that has the opposite conflict in the conflict set. The re-planning module 808 is configured to perform the path re-planning on each target robot in the re-planning set according to the opposite conflict.

In some embodiments, the first conflict type includes a stay conflict. The determining module 806 is configured to: for a fourth robot that has a stay conflict, count an end-point operation duration of a robot that has the stay conflict with the fourth robot based on conflict information of the fourth robot; and determine the fourth robot as the target robot in response to the end-point operation duration exceeds a preset duration threshold.

In some embodiments, the first conflict type includes a cross conflict and a following conflict. The determining module 806 is configured to: for at least one fifth robot that has a cross conflict and/or a following conflict, obtain a sum of a number of cross conflicts and a number of following conflicts of each of the at least one fifth robot by counting a number of robots that have a cross conflict or a following conflict with each of the at least one fifth robot according to the conflict information of the at least one fifth robot; and determine a fifth robot with a maximum sum of the number of cross conflicts and the number of following conflicts in the at least one fifth robot as the target robot.

In some embodiments, the determining module 806 is configured to: for at least one fifth robot in a conflict set, obtain the sum of the number of cross conflicts and the number of following conflicts of each of the at least one fifth robot by counting the number of robots that have a cross conflict or a following conflict with each of the at least one fifth robot according to the conflict information of the at least one fifth robot; in which, the conflict set is configured to record robots having conflicts. The multi-robot path planning device 800 also includes a second execution module. The second execution module is configured to: delete the target robot from the conflict set, and store the target robot into a re-planning set, until there is no fifth robot whose corresponding sum of the number of cross conflicts and the number of following conflicts is greater than a preset number threshold in the conflict set, or a number of robots in the re-planning set exceeds a preset number. The re-planning module 808 is configured to perform the path re-planning on each target robot in the re-planning set according to the cross conflict and the following conflict.

In some embodiments, the re-planning module 808 is configured to: determine a basic traffic cost corresponding to the first conflict type; predict a probability of conflict occurrence between each of at least one conflict robot and the target robot at a target path point, in which the target path point is a path point within a preset range of a current position of the target robot; determine at least one traffic cost incurred by the at least one conflict robot, respectively, on the target robot at the target path point according to the basic traffic cost and the probability of conflict occurrence; and perform path re-planning on the target robot based on the at least one traffic cost.

In some embodiments, the multi-robot path planning device 800 also includes a recording module, configured to record the to-be-driving information of the plurality of robots in a preset information table. The predicting module is configured to: predict the conflict information of the plurality of robots according to the to-be-driving information of the plurality of robots in the preset information table by traversing the preset information table.

It should be noted that the technical solution of a multi-robot path planning device provided by the above embodiments belongs to a same concept as the technical solution of the above-mentioned multi-robot path planning method. For details of the technical solution of the multi-robot path planning device that are not described in detail, reference may be made to the description of the description of the technical solution of the above multi-robot path planning method. In addition, each component in the device embodiments should be understood as the functional modules that is established to implement each step of the program flow or each step of the method. The functional modules are not an actual functional division or separation limit. The device claim defined by such a set of functional modules should be understood as a functional module structure that mainly implements the solution through the computer program described in the specification, and should not be understood as a physical device that mainly implements the solution through hardware.

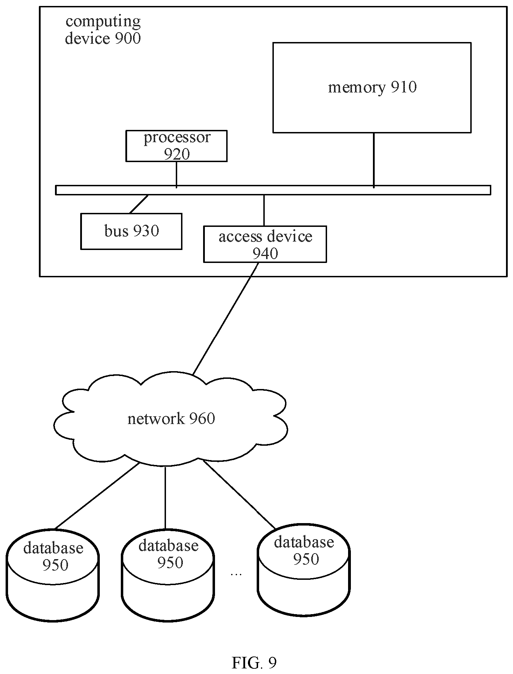

FIG. 9 is a schematic diagram of a computing device provided by some embodiments of the present disclosure. As shown in FIG. 9, the computing device 900 includes a memory 910 and a processor 920. The processor 920 and the memory 910 are connected through a bus 930, and a database 950 is used to save data.

In some examples, the computing device 900 also includes an access device 940 that enables the computing device 900 to communicate via one or more networks 960. Examples of these networks include one or a combination of a public switched telephone network (PSTN), a local area network (LAN), a wide area network (WAN), a personal area network (PAN) or the Internet. The access device 940 may include one or more of any type of wired or wireless network interfaces (e.g., network interface controller (NIC)), such as a wireless interface of an IEEE802.11 wireless local area network (WLAN), an interface of a worldwide interoperability for microwave access (Wi-MAX), an Ethernet interface, a universal serial bus (USB) interface, a cellular network interface, a Bluetooth interface, a near field communication (NFC) interface, and so on.

In some examples, the above parts of the computing device 900 and other parts not shown in the FIG. 9 may also be connected to each other, for example via a bus. For example, the schematic diagram of the computing device shown in the FIG. 9 is exemplary only and is not a limitation on the scope of the present disclosure. Those skilled in the art may add or replace other parts as needed.

In some examples, the computing device 900 may be any type of stationary or mobile safety controller, including a mobile computer or a mobile safety controller (e.g., a tablet, a personal digital assistant, a laptop computer, a netbook, etc.), a mobile phone (e.g., a smart phone), a wearable safety controller (e.g., a smart watch, a smart glass, etc.) or other types of mobile devices, or a stationary safety controller such as a desktop computer or a personal computer (PC). The computing device 900 may also be a mobile or stationary server.

The processor 920 is used to execute the computer-executable instructions of the multi-robot path planning method.

It needs to be noted that a technical solution of the computing device 900 belongs to a same idea as a technical solution of the above multi-robot path planning method. For details that are not described in detail in the technical solution of the computing device, reference may be made to the description of the technical solution of the above multi-robot path planning method.

In some embodiments, embodiments of the present disclosure also provide a computer-readable storage medium storing computer instructions, which when executed by a processor, are used for a multi-robot path planning method.

It should be noted that the technical solution of the computer-readable storage medium provided by this embodiment belongs to a same idea as the technical solution of the multi-robot path planning method mentioned above. For details that are not described in detail in the technical solution of the storage medium, reference may be made to the description of the technical solution of the above multi-robot path planning method.

The multi-robot path planning device, computing device and computer-readable storage medium provided by the embodiments of the present application are all used to execute the corresponding multi-robot path planning method provided above. Therefore, the beneficial effects it can achieve can be referred to the above. The beneficial effects of the corresponding methods provided will not be described again here.

Specific embodiments of the present disclosure are described above. Other embodiments are within the scope of the appended claims. In some cases, actions or steps described in the claims may be performed in an order different from the order in the embodiments and still achieve a desired result. In addition, a process depicted in the accompanying drawings does not necessarily need to follow a specific sequence or a consecutive order to achieve the desired result. In some embodiments, multitasking and parallel processing are also possible or may be advantageous.

The computer instruction includes computer program codes. The computer program codes may be in a form of source codes, object codes, an executable file or some intermediate forms. The computer readable media may include any entity or apparatus, any recording medium, any USB flash disk, any mobile hard disk drive, any diskette, any optical disc, any computer memory, any read-only memory (ROM), any random access memory (RAM), any electric carrier signal, any telecommunication signal and software distribution medium that is capable of carrying the computer program codes.

It needs to be noted that, in order to simplify description the present disclosure, embodiments of the present disclosure are expressed as a series of action combinations, but it would be appreciated by those skilled in the art that the present disclosure is not limited to the order of the actions, because some steps may be executed in other orders or be executed at the same time. In addition, it would be further appreciated by those skilled in the art that embodiments described in the specification are preferred embodiments, actions and modules involved therein may not be necessary for the present disclosure.

In above embodiments, descriptions of respective embodiments are emphasized differently, and parts that are not detailed in some embodiments may refer to relevant descriptions of other embodiments.

The above embodiments of the present disclosure are only intended to assist in elaborating the present disclosure. The above embodiments do not elaborate on all the details and do not limit the disclosure to specific embodiments described above. Obviously, based on the content of the present disclosure, many modifications and changes may be made. The present disclosure selects and specifically describes these embodiments for the purpose of better explaining the principle and practical application of the present disclosure, so that those skilled in the art may better understand and use the present disclosure. The present disclosure is only limited by the appended claims, all scope covered by the claims and equivalents.

**Claims**

1. A multi-robot path planning method, comprising:

   obtaining to-be-driving information of a plurality of robots;
   predicting conflict information of the plurality of robots according to the to-be-driving information of the plurality of robots; wherein the conflict information comprises a conflict type of a conflict occurs between a robot and other robots;
   counting conflict information of a robot whose conflict type is a first conflict type according to the conflict information of the plurality of robots, and determining a robot that meets a re-planning condition corresponding to the first conflict type as a target robot according to a counting result, wherein the first conflict type is any conflict type among a plurality of conflict types; and
   performing path re-planning on the target robot according to the first conflict type.

2. The method according to claim 1, wherein predicting the conflict information of the plurality of robots according to the to-be-driving information of the plurality of robots comprises:

   determining target driving data of each robot within a preset conflict detection range according to the to-be-driving information of the plurality of robots;
   in response to identifying that a first robot and a second robot pass through a same path point within a preset time period according to the target driving data of the first robot and the second robot, determining that there is a conflict between the first robot and the second robot, wherein the first robot and the second robot are any two robots among the plurality of robots;
   identifying a conflict type of the conflict between the first robot and the second robot according to the target driving data of the first robot and the second robot; and
   generating conflict information of the first robot according to the conflict type.

3. The method according to claim 2, wherein, before generating the conflict information of the first robot according to the conflict type, the method further comprises:

> determining target position parameters of the first robot and the second robot according to the target driving data of the first robot and the second robot;
> wherein generating the conflict information of the first robot according to the conflict type comprises:
> generating the conflict information of the first robot according to the conflict type in a case that the target position parameters meet a preset position constraint condition.

4. The method according to claim 3, wherein the target position parameter comprises: a time point of arriving at the path point;
the preset position constraint condition comprises: a time point of the first robot arriving at the path point being later than a time point of the second robot arriving at the path point, and/or a time difference between the time point of the first robot arriving at the path point and the time point of the second robot arriving at the path point being less than a preset time threshold.

5. The method according to claim 2, wherein identifying the conflict type of the conflict between the first robot and the second robot according to the target driving data of the first robot and the second robot comprises:

> in response to identifying that the first robot and the second robot pass through a same path edge according to the target driving data of the first robot and the second robot, identifying driving directions of the first robot and the second robot according to the target driving data of the first robot and the second robot; wherein the path edge comprises the path point;
> in response to the driving directions of the first robot and the second robot are the same, determining that the conflict type of the conflict between the first robot and the second robot is a following conflict;
> in response to the driving directions of the first robot and the second robot are different, determining that the conflict type of the conflict between the first robot and the second robot is an opposite conflict; and
> in response to identifying that the first robot and the second robot do not pass through the same path edge according to the target driving data of the first robot and the second robot, determining that the conflict type of the conflict between the first robot and the second robot is a cross conflict.

6. The method according to claim 2, wherein identifying the conflict type of the conflict between the first robot and the second robot according to the target driving data of the first robot and the second robot comprises:
in response to identifying that, according to the target driving data of the first robot and the second robot, the second robot takes the path point as an end point and the first robot does not take the path point as an end point, determining that the conflict type of the conflict between the first robot and the second robot is a stay conflict.

7. The method according to any one of claims 1-6, wherein the first conflict type comprises an opposite conflict;
wherein, counting conflict information of the robot whose conflict type is the first conflict type according to the conflict information of the plurality of robots, and determining a robot that meets a re-planning condition corresponding to the first conflict type as a target robot according to a counting result, comprises:

> for at least one third robot that has an opposite conflict, obtaining a number of opposite conflicts of each third robot by counting a number of robots that have an opposite conflict with each third robot based on the conflict information of the at least one third robot; and
> determining a third robot with a maximum number of opposite conflicts among the at least one third robot as the target robot.

8. The method according to claim 7, wherein for at least one third robot that has an opposite conflict, obtaining a number of opposite conflicts of each third robot by counting a number of robots that have an opposite conflict with each third robot based on the conflict information of the at least one third robot, comprises:

> for at least one third robot in a conflict set, obtaining the number of opposite conflicts of each third robot by counting the number of robots that have an opposite conflict with each third robot according to the conflict information of each third robot; wherein, the conflict set is configured to record robots having conflicts;
> after determining the third robot with the maximum number of opposite conflicts among the at least one third robot as the target robot, the method further comprises:

deleting the target robot from the conflict set, and storing the target robot into a re-planning set, until there is no third robot that has the opposite conflict in the conflict set;

wherein performing path re-planning on the target robot according to the first conflict type comprises:

performing the path re-planning on each target robot in the re-planning set according to the opposite conflict.

9. The method according to any one of claims 1-6, wherein the first conflict type comprises a stay conflict;

wherein, counting conflict information of the robot whose conflict type is the first conflict type according to the conflict information of the plurality of robots, and determining a robot that meets a re-planning condition corresponding to the first conflict type as a target robot according to a counting result, comprises:

for a fourth robot that has a stay conflict, counting an end-point operation duration of a robot that has the stay conflict with the fourth robot based on conflict information of the fourth robot; and

determining the fourth robot as the target robot in response to the end-point operation duration exceeds a preset duration threshold.

10. The method according to any one of claims 1-6, wherein the first conflict type comprises a cross conflict and a following conflict;

wherein, counting conflict information of the robot whose conflict type is the first conflict type according to the conflict information of the plurality of robots, and determining a robot that meets a re-planning condition corresponding to the first conflict type as a target robot according to a counting result, comprises:

for at least one fifth robot that has a cross conflict and/or a following conflict, obtaining a sum of a number of cross conflicts and a number of following conflicts of each of the at least one fifth robot by counting a number of robots that have a cross conflict or a following conflict with each of the at least one fifth robot according to the conflict information of the at least one fifth robot; and

determining a fifth robot with a maximum sum of the number of cross conflicts and the number of following conflicts in the at least one fifth robot as the target robot.

11. The method according to claim 10, wherein, for at least one fifth robot that has a cross conflict and/or a following conflict, obtaining the sum of the number of cross conflicts and the number of following conflicts of each of the at least one fifth robot by counting the number of robots that have a cross conflict or a following conflict with each of the at least one fifth robot according to the conflict information of the at least one fifth robot, comprises:

for at least one fifth robot in a conflict set, obtaining the sum of the number of cross conflicts and the number of following conflicts of each of the at least one fifth robot by counting the number of robots that have a cross conflict or a following conflict with each of the at least one fifth robot according to the conflict information of the at least one fifth robot; wherein, the conflict set is configured to record robots having conflicts;

after determining the fifth robot with the maximum sum of the number of cross conflicts and the number of following conflicts among the at least one fifth robot as the target robot, the method further comprises:

deleting the target robot from the conflict set, and storing the target robot into a re-planning set, until there is no fifth robot whose corresponding sum of the number of cross conflicts and the number of following conflicts is greater than a preset number threshold in the conflict set, or a number of robots in the re-planning set exceeds a preset number;

wherein performing path re-planning on the target robot according to the first conflict type comprises:

performing the path re-planning on each target robot in the re-planning set according to the cross conflict and the following conflict.

12. The method according to claim 1, wherein performing path re-planning on the target robot according to the first conflict type comprises:

determining a basic traffic cost corresponding to the first conflict type;

predicting a probability of conflict occurrence between each of at least one conflict robot and the target robot at a target path point, wherein the target path point is a path point within a preset range of a current position of the target robot;

determining at least one traffic cost incurred by the at least one conflict robot, respectively, on the target robot at the target path point according to the basic traffic cost and the probability of conflict occurrence; and

performing path re-planning on the target robot based on the at least one traffic cost.

13. The method according to claim 1, wherein after obtaining the to-be-driving information of the plurality of robots, the method further comprises:

recording the to-be-driving information of the plurality of robots in a preset information table;
wherein predicting the conflict information of the plurality of robots according to the to-be-driving information of the plurality of robots comprises:
predicting the conflict information of the plurality of robots according to the to-be-driving information of the plurality of robots in the preset information table by traversing the preset information table.

14. A multi-robot path planning device, comprising:

an obtaining module, configured to obtain to-be-driving information of a plurality of robots;
a predicting module, configured to predict conflict information of the plurality of robots according to the to-be-driving information of the plurality of robots; wherein the conflict information comprises a conflict type of a conflict occurs between a robot and other robots;
a determining module, configured to count conflict information of a robot whose conflict type is a first conflict type according to the conflict information of the plurality of robots, and determine a robot that meets a re-planning condition corresponding to the first conflict type as a target robot according to a counting result, wherein the first conflict type is any conflict type among a plurality of conflict types; and
a re-planning module, configured to perform path re-planning on the target robot according to the first conflict type.

15. A computing device, comprising:

a memory and a processor;
wherein the memory is configured to store computer-executable instructions, and the processor is configured to execute the computer-executable instructions to implement steps of the multi-robot path planning method of any one of claims 1 to 13.

16. A computer-readable storage medium for storing computer instructions that, when executed by a processor, steps of the multi-robot path planning method of any one of claims 1-13 are performed.

path planning end 101

memory 1011

processor 1012

program codes of
path planning rules

program codes of path planning rules

robot 1021

robot 1022

robot 1023

robot end 102

FIG. 1

obtaining to-be-driving information of a plurality of robots — 202

predicting conflict information of the plurality of robots according to the to-be-driving information of the plurality of robots; wherein the conflict information comprises a conflict type of a conflict occurs between a robot and other robots — 204

counting conflict information of a robot whose conflict type is a first conflict type according to the conflict information of the plurality of robots, and determining a robot that meets a re-planning condition corresponding to the first conflict type as a target robot according to a counting result — 206

performing path re-planning on the target robot according to the first conflict type — 208

FIG. 2

FIG. 3A

FIG. 3B

FIG. 3C

FIG. 3D

Start

the number of opposite conflicts of each third robot in a conflictSet is determined — 402

the target robot is deleted from the conflictSet and put into the rePlanSet — 408

a third robot with the largest number of opposite conflicts is determined as a target robot — 404

it is determined whether the conflictSet is empty, or whether the number of opposite conflicts of each third robot is 0 — 406

no

yes

ending

FIG. 4

Start

a sum of a number of cross conflicts and a number of following conflicts of each fifth robot in the conflictSet is determined — 502

the target robot is deleted from the conflictSet and put into the rePlanSet — 508

a fifth robot with the maximum sum of the number of cross conflicts and a number of following conflicts is determined as the target robot — 504

it is determined whether there is a fifth robot that corresponds to a sum greater than a preset number threshold in the conflict set, or whether the number of robots in the re-planning set exceeds a preset number — 506

no

yes

Ending

FIG. 5

conflict detection is triggered according to a preset detection cycle, and to-be-driving information of multiple robots are obtained / 602

the to-be-driving information of the multiple robots are recorded into a preset information table / 604

conflict information of each robot within a preset conflict detection range is determined / 606

robots with a number of conflicts greater than 0 are put into a conflictSet, and a rePanSet = empty set / 608

a target robot that meets a re-planning condition of an opposite conflict is put into the rePanSet / 610

a target robot that meets a re-planning condition of a stay conflict is put into the rePanSet / 612

a target robot that meets a re-planning condition of a cross conflict and a following conflict is put into the rePanSet / 614

path re-planning is performed on the target robots in the rePanSet / 616

FIG. 6

according to a detection cycle of 3 seconds, to-be-driving information of robot A {4→5→6→3}, to-be-driving information of robot B {6→5→2}, and to-be-driving information of robot C {3→ 6→9} are obtained
/ 702

in the six grids of the preset conflict detection range, target driving data of robot A {4→5→6→3}, target driving data of robot B {6→5→2}, and target driving data of robot C Data{3→6} are determined
/ 704

it is determined that conflicts existing in robot A include one opposite conflict with robot B and one stay conflict with robot C, a conflict existing in robot B includes one opposite conflict with robot A
/ 706

for the opposite conflict, robot B is determined as a target robot for path re-planning; for the stay conflict, robot A is determined as a robot for path re-planning
/ 708

a basic traffic cost corresponding to the opposite conflict is 5, and a basic traffic cost corresponding to the following conflict is 2, then the path re-planning for robot A is: {4→1→2→3}, and the path re-planning for robot B is: {6→9→8→5→2}
/ 710

FIG. 7A

FIG. 7B

24

obtaining module 802

to-be-driving
information of multiple
robots

predicting module 804

conflict information of
each robot

re-planning module 808

target robot

determining module 806

target robot

FIG. 8

FIG. 9

## INTERNATIONAL SEARCH REPORT

| International application No. |
| --- |
| **PCT/CN2023/115133** |

| **A.** | **CLASSIFICATION OF SUBJECT MATTER** |
| --- | --- |

G05D1/02(2020.01)i

According to International Patent Classification (IPC) or to both national classification and IPC

| **B.** | **FIELDS SEARCHED** |
| --- | --- |

Minimum documentation searched (classification system followed by classification symbols)

IPC:G05D1

Documentation searched other than minimum documentation to the extent that such documents are included in the fields searched

Electronic data base consulted during the international search (name of data base and, where practicable, search terms used)

CNABS, CNTXT, CNKI: 机器人, 路径, 规划, 冲突, 类型, 类别, 分类, 障碍, 碰撞, 跟随, 相向, 交叉, 停留, 交通, 代价, 位置, 终点; VEN, USTXT, EPTXT, ELSEVIER: robot, AGV, path, route, layout, conflict, type, sort, kind, obstacle, collide, follow, in opposite directions, face to face, across, settle, stay, traffic, cost, price, place, position, terminal, end point

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 116184996 A (BEIJING GEEK+ TECHNOLOGY CO., LTD.) 30 May 2023 (2023-05-30) claims 1-16 | 1-16 |
| X | CN 114527751 A (BEIJING GEEK+ TECHNOLOGY CO., LTD.) 24 May 2022 (2022-05-24) description, paragraphs 53-143, and figures 1-7 | 1-16 |
| X | CN 114661047 A (NANJING NORMAL UNIVERSITY) 24 June 2022 (2022-06-24) description, paragraphs 39-64, and figures 1-6 | 1-16 |
| A | CN 108268016 A (GUANGDONG MIDEA INTELLIGENT ROBOT CO., LTD.) 10 July 2018 (2018-07-10) entire document | 1-16 |
| A | CN 113870602 A (HUNAN UNIVERSITY) 31 December 2021 (2021-12-31) entire document | 1-16 |
| A | US 2011071750 A1 (MITRE CORP.) 24 March 2011 (2011-03-24) entire document | 1-16 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 November 2023** | **10 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/115133**

| Patent document cited in search report | | | Publication date (day/month/year) | Patent family member(s) | | | Publication date (day/month/year) |
|---|---|---|---|---|---|---|---|
| CN | 116184996 | A | 30 May 2023 | None | | | |
| CN | 114527751 | A | 24 May 2022 | None | | | |
| CN | 114661047 | A | 24 June 2022 | None | | | |
| CN | 108268016 | A | 10 July 2018 | WO | 2019141221 | A1 | 25 July 2019 |
| CN | 113870602 | A | 31 December 2021 | CN | 113870602 | B | 29 July 2022 |
| US | 2011071750 | A1 | 24 March 2011 | None | | | |

Form PCT/ISA/210 (patent family annex) (July 2022)

**REFERENCES CITED IN THE DESCRIPTION**

**Patent documents cited in the description**

- CN 202211091138